# EUROPEAN PATENT SPECIFICATION

(11) **EP 3 876 381 B1**
(45) Date of publication and mention of the grant of the patent: **20.12.2023**
(21) Application number: 19878074.4
(22) Date of filing: 29.10.2019
(51) Int. Cl.: H02J 7/00, H01M 10/44

(54) **CHARGE AND DISCHARGE CONTROL METHOD AND APPARATUS FOR TERMINAL**
LADE- UND ENTLADESTEUERUNGSVERFAHREN UND VORRICHTUNG FÜR ENDGERÄTE
PROCÉDÉ ET APPAREIL DE CONTRÔLE DE CHARGE ET DE DÉCHARGE POUR TERMINAL

(30) Priority: 30.10.2018 CN 201811280924
(43) Date of publication of application: 08.09.2021
(73) Proprietor: ZTE Corporation, Shenzhen, Guangdong 518057 (CN)
(72) Inventor: DOU, Mingming, Shenzhen, Guangdong 518057 (CN); JIA, Baofeng, Shenzhen, Guangdong 518057 (CN); ZHANG, Bo, Shenzhen, Guangdong 518057 (CN)
(74) Representative: Zoli, Filippo
(86) International application number: PCT/CN2019/113817
(87) International publication number: WO 2020/088424

(56) References cited:
- EP-A1- 3 032 695
- EP-A1- 3 319 203
- WO-A1-2015/155939
- US-A1- 2015 048 797
- US-A1- 2016 097 820

## Description

### TECHNICAL FIELD

The present invention relates to the field of communications, in particular to a charge and discharge control method and apparatus for a terminal, a non-transitory computer-readable storage medium and an electronic apparatus.

### BACKGROUND

With the development of smart terminals represented by mobile phones, people have greater expectations for the endurance of smart terminals. In a terminal, in addition to a single battery, two batteries or more batteries may be used to increase the endurance of the terminal, and using two batteries or more batteries gradually becomes a trend.

For a terminal with a single battery, because only the same one battery is used for a long time, the battery may swell and then cause a safety accident. For a terminal with multiple batteries, although the multiple batteries are used in turn, excessive use may cause the batteries to swell and then cause a safety problem. Charging and discharging (where charging refers to charging the batteries in the terminal and discharging refers to supplying power using the batteries in the terminal) of a terminal with two batteries will be described as an example.

Currently, main strategies for charging and discharging of the terminal with two batteries are as follows:
- preferential charging or discharging is performed using a primary battery of primary and secondary batteries, such that the primary battery may be used more frequently than the secondary battery; and
- preferential charging or discharging is performed according to the power or voltage of the primary and secondary batteries. Specifically, the battery with lower voltage or power is charged preferentially and the battery with higher power or voltage is discharged preferentially.

Each of the two batteries uses a separate charging chip, and the two batteries are charged or discharged simultaneously.

However, it should be noted that in charging and discharging strategies of terminals in the existing technology, the safety of batteries is not considered emphatically.

In view of the above-mentioned problem existing in the existing technology, no effective schemes have been proposed at present.

Patent Literature EP3319203A1 relates to an electrical storage system including an electrical storage unit that includes one or two or more storage batteries, a storage unit that stores historical information of the electrical storage unit, and a control unit. The control unit acquires the historical information from the storage unit, and performs a control of changing a charging setting voltage value of the electrical storage unit to a low-charging voltage value lower than a typical-charging voltage value in a case where the charging setting voltage value of the electrical storage unit is set to the typical-charging voltage value and in a case where the historical information satisfies a voltage changing condition, and of returning the charging setting voltage value of the electrical storage unit to the typical-charging voltage value after the electrical storage unit performs charging and discharging with the low-charging voltage value.

Patent Literature (EP3032695A1) relates to a battery control system connected to a battery, which controls charge/discharge at the battery, includes: a current detection unit that measures a current value by detecting a charge/discharge current flowing through the battery; a voltage detection unit that detects a voltage at the battery; a temperature detection unit that detects a temperature at the battery; a temperature history recording unit that records temperature history pertaining to the temperature detected by the temperature detection unit; and a charge/discharge restriction unit that restricts the charge/discharge current in a low-temperature state based upon the temperature history recorded by the temperature history recording unit.

Patent Literature (US2016097820A1) relates to a battery system for a portable information handling system may modify charging parameters based on temperature exposure of a battery. When the battery is charged and exposed to a high temperature, the battery may be discharged to a lower voltage. After a cumulative period of exposure to a high temperature, a top-of-charge (TOC) voltage may be permanently reduced for the battery. Prior to charging at a high temperature, the TOC voltage may be reduced for a next charge cycle. Reducing the TOC voltage may minimize adverse effects for battery performance.

Patent Literature (US2015048797A1) relates to a battery pack is disclosed. In one aspect, the battery pack includes a battery including at least one battery cell and a battery managing unit for controlling charging and discharging of the battery. The battery managing unit includes a measuring unit measuring at least one parameter of the battery per sampling period and generating measurement data. The battery managing unit also includes a control unit including a plurality of counters corresponding to a plurality of sections defined with respect to the parameter and configured to increment a counter corresponding to the section including the measurement data. The battery managing unit also includes a storage unit storing counter values of the counters in a predetermined address per logging period.

Patent Literature (WO2015155939A1) relates to a storage device includes a storage unit, and an evaluation value acquisition unit wherein the evaluation value acquisition unit is configured to acquire an evaluation value including at least a first evaluation value corresponding to the storage unit in a low-temperature region and a second evaluation value corresponding to the storage unit in a high-temperature region.

While the above publications may achieve their intended purposes, there is still a need for a new and improved charge and discharge control method and apparatus for a terminal.

### SUMMARY

Embodiments of the present invention provide a charge and discharge control method and apparatus for a terminal, a non-transitory computer-readable storage medium and an electronic apparatus, to at least solve the problem in at least a certain extent, which exists in the existing technology that when a battery in a terminal is used for charging or discharging for a long time, the battery may swell and cause a safety accident.

An embodiment of the present invention provides a charge and discharge control method for a terminal. The method may include: determining temperature parameters of at least one battery in the terminal, where the temperature parameters comprise at least one of a cumulative time TS for which the temperature of the at least one battery is greater than a first preset value, and a continuous time TN for which the temperature of the at least one battery is greater than a second preset value; and performing charge and discharge control on the at least one battery in the terminal according to the temperature parameters; and performing charge and discharge control on the at least one battery in the terminal according to the temperature parameters includes following operations, in response to determining that a respective one of the at least one battery has TS less than or equal to the first cumulative time threshold in the terminal, considering the respective one of the at least one battery as a battery of first type, and performing a charging or discharging operation using the battery of first type; where, performing a charging or discharging operation using the battery of first type includes, in response to determining that a respective battery of first type has TN less than or equal to a continuous time threshold, considering the respective battery of first type as a battery of second type, and performing a charging or discharging operation using the battery of second type.

Another embodiment of the present invention provides a charge and discharge control apparatus for a terminal. The apparatus may include: a determination module configured to determine temperature parameters of at least one battery in a terminal, where the temperature parameters comprise at least one of a cumulative time TS for which the temperature of the at least one battery is greater than a first preset value, and a continuous time TN for which the temperature of the at least one battery is greater than a second preset value; and a control module configured to perform charge and discharge control on the at least one battery in the terminal according to the temperature parameters; ; and the performance of charge and discharge control on the at least one battery in the terminal according to the temperature parameters includes following operations, in response to determining that a respective one of the at least one battery has TS less than or equal to the first cumulative time threshold in the terminal, considering the respective one of the at least one battery as a battery of first type, and performing a charging or discharging operation using the battery of first type; where, performing a charging or discharging operation using the battery of first type includes, in response to determining that a respective battery of first type has TN less than or equal to a continuous time threshold, considering the respective battery of first type as a battery of second type, and performing a charging or discharging operation using the battery of second type.

### BRIEF DESCRIPTION OF DRAWINGS

The accompanying drawings described herein are intended to provide a further understanding of the invention and form part of the present application, and the illustrative embodiments of the invention and the description thereof are intended to explain the invention and do not constitute undue limitations on the invention. In the drawings:
Fig. 1 is a hardware structural block diagram of a mobile terminal to which a charge and discharge control method for a terminal is applied according to an embodiment of the present invention;
Fig. 2 is a flowchart of a charge and discharge control method for a terminal according to an embodiment of the present invention;
Fig. 3 is a first flowchart of a charge and discharge control method for a terminal according to an embodiment of the present invention;
Fig. 4 is a second flowchart of a charge and discharge control method for a terminal according to an embodiment of the present invention;
Fig. 5 is a third flowchart 3 of a charge and discharge control method for a terminal according to an embodiment of the present invention;
Fig. 6 is a structural block diagram of a terminal with two batteries according to an embodiment of the present invention;
Fig. 7 is a first basic block diagram showing charging of two batteries according to an embodiment of the present invention;
Fig. 8 is second basic block diagram showing charging of two batteries according to an embodiment of the present invention;
Fig. 9 is a flowchart showing power supply of a terminal with two batteries according to an embodiment of the present invention;
Fig. 10 is a flowchart showing charging of a terminal with two batteries according to an embodiment of the present invention;
Fig. 11 is a flowchart showing charging of a single battery according to an embodiment of the present invention; and
Fig. 12 is a structural block diagram of a charge and discharge control apparatus for a terminal according to an embodiment of the present invention.

### DETAILED DESCRIPTION

The present invention will be described in detail with reference to the drawings and in connection with the embodiments. It should be noted that the embodiments of the present application and the features in the embodiments may be combined with each other in case there is no conflict therebetween.

It should be noted that the terms "first", "second" and the like in the description and claims of the present invention and the drawings are used to distinguish similar objects without having to be used to describe a particular order or sequence.

First of all, it should be noted that when a battery in a terminal is frequently used for charging or discharging at high temperature, a stored cumulative time of high-temperature of the battery may increase continuously, and when the time reaches a critical value specified for the battery, it is easy to cause the battery to swell and then cause a safety accident. Therefore, the following issues need to be considered, for example, how to control charging or discharging of a battery? How to ensure the safe use of the battery? How to charge more efficiently?

Improvements in some cases are described below in connection with embodiments.

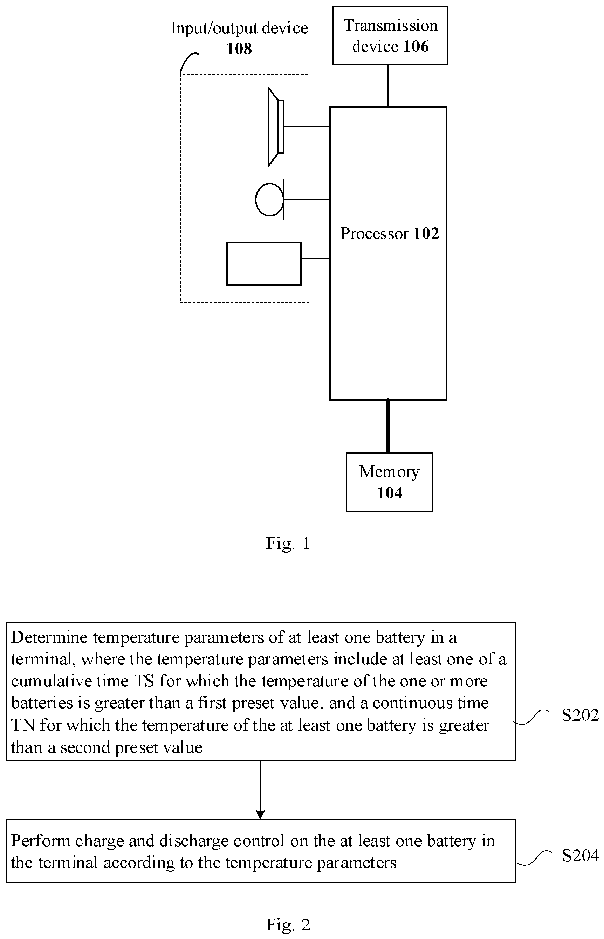

The methods provided in the embodiments of the present application can be performed in a mobile terminal, a computing terminal, or a similar computing device. With respect to a mobile terminal, FIG. 1 is a hardware block diagram of a mobile terminal to which a terminal charging/discharging control method is applied according to an embodiment of the present invention. As shown in FIG. 1, the mobile terminal includes one or more processors 102 (only one is shown in FIG. 1) (the processor 102 may include, but is not limited to, a processing device such as a microprocessor MCU or a programmable logic device FPGA) and a memory 104 for storing data. In some embodiments, the mobile terminal also includes a transmission device 106 for a communication function and an input/output device 108. Those having ordinary skills in the art shall appreciate that the structure shown in FIG. 1 is merely schematic and does not limit the structure of the mobile terminal. In some embodiments, the mobile terminal 10 includes more or fewer components than those shown in FIG. 1, or have a different configuration than those shown in FIG. 1.

The memory 104 is configured to store a computer program, for example, a software program and a module of application software, such as a computer program corresponding to a charging and discharging control method of a terminal in the embodiment of the present invention, and the processor 102 executes various functional applications and data processing by executing the computer program stored in the memory 104, that is, to implement the above-described method. Memory 104 may include high-speed random access memory, and may also include non-volatile memory such as one or more magnetic storage devices, flash memory, or other non-volatile solid-state memory. In some examples, the memory 104 may also include memory remotely disposed relative to the processor 102, which may be connected to the mobile terminal 10 over a network. Examples of the above networks include, but are not limited to, the Internet, an intranet, a local area network, a mobile communication network, and combinations thereof.

The transmission device 106 is for receiving or transmitting data via a network. The specific example of the network described above may include a wireless network provided by a communication provider of the mobile terminal 10. In one example, the transmission device 106 includes a network adapter (Network Interface Controller, abbreviated as NIC) that can be connected to other network devices via a base station to communicate with the Internet. In one example, the transmission device 106 may be a radio frequency (RF) module for communicating with the Internet in a wireless manner.

In this embodiment, a charge and discharge control method is provided. Fig. 2 is a flowchart of a charge and discharge control method for a terminal according to an example not being part of the present invention.

As shown in Fig. 2, the flow includes following steps S202 and S204.

At step S202, temperature parameters of one or more batteries in a terminal are determined, where the temperature parameters include at least one of a cumulative time TS for which the temperature of the battery is greater than a first preset value, and a continuous time TN for which the temperature of the battery is greater than a second preset value.

At step S204, charge and discharge control is performed on the one or more batteries in the terminal according to the temperature parameters.

The above steps can be executed by the above mobile terminal or other terminals. In the embodiment, TS refers to a cumulative total time for which the battery has been in a high-temperature state from leaving the factory until now, and TN refers to a continuous time for which the battery has been in a high-temperature state from leaving the factory until now. In the embodiment, the values of the first preset value and the second preset value may be the same or may be different.

In this embodiment, the charging or discharging of the terminal is controlled according to the temperature parameters of the battery, that is to say, when using the terminal to charge and discharge, the temperature parameters of the battery are considered comprehensively, so that the battery is prevented from being frequently used for charging or discharging at high temperature, thus solving a problem in the existing technology that when the battery in the terminal is used for charging and discharging for a long time, the battery may swell and cause a safety accident. Therefore, the effects of improving battery safety, reducing swelling phenomena, and ensuring the use safety of the terminal are effectively achieved.

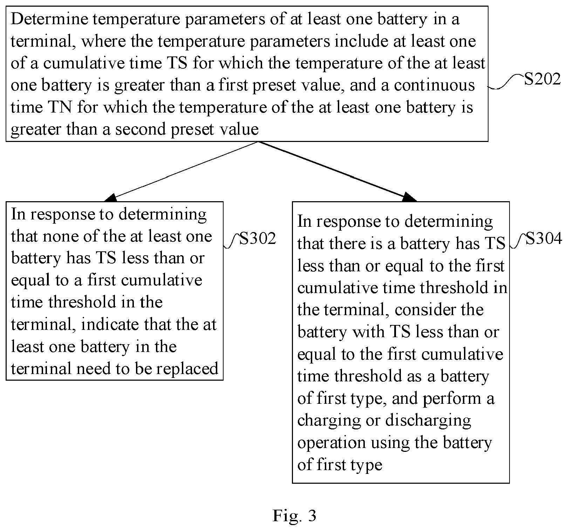

Fig. 3 is a first flowchart of a charge and discharge control method for a terminal according to an example not being part of the present invention.

As shown in Fig. 3, when the temperature parameters include TS, the step S204 includes at least one of following steps S302 and S304:
At step S302, when it is determined that there is no battery in the terminal with TS of the battery being less than or equal to a first cumulative time threshold, an indication that the batteries in the terminal need to be replaced is performed.

At step S304, when it is determined that there is a battery in the terminal with TS of the battery being less than or equal to the first cumulative time threshold, the battery with TS less than or equal to the first cumulative time threshold is considered as a battery of first type, and a charging or discharging operation is performed using the battery of first type.

In this embodiment, the first cumulative time threshold is a threshold for warning against cumulative time of high temperature which is represented by TSH (if the threshold is exceeded, the battery is prone to swell. In some embodiments, the value of the threshold is fixed, that is, may be set when the battery leaves the factory, for example, may be set to 3 months, 4 months or the like. In some embodiments, the value of the threshold is adjustable, for example, may be adjusted manually, or may be adjusted automatically according to a preset adjustment condition).

In some examples not being part of the present invention, when the battery in the terminal is used for charging or discharging, the charging or discharging of the terminal is controlled in consideration of the TS value of the battery in the terminal only, that is to say, only according to the TS value of the battery. Of course. In the present invention, the charging or discharging of the terminal is controlled in consideration of the TN value of the battery in the terminal in combined consideration of the TS value of the battery and other temperature parameters.

The charging or discharging of the terminal controlled in combined consideration of the TS value and TN value of the battery according to the invention will be described below.

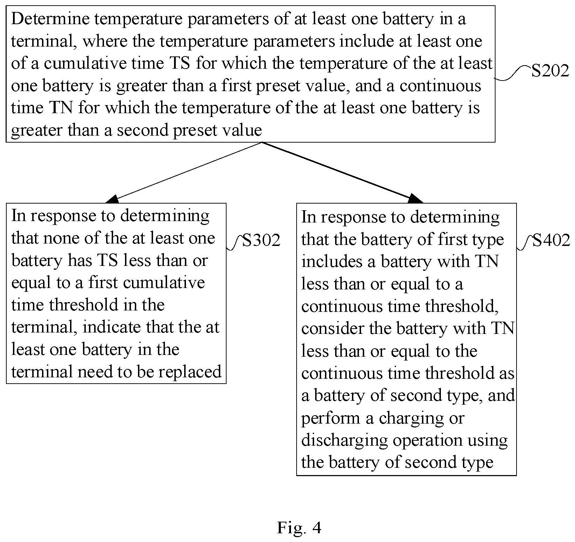

Fig. 4 is a second flowchart of a charge and discharge control method for a terminal according to an embodiment of the present invention. As shown in Fig. 4, when the temperature parameters include TN in addition to TS, step S304 includes a following step.

At step S402, when it is determined that the battery or batteries of first type include a battery with TN of the battery being less than or equal to a continuous time threshold, the battery with TN less than or equal to the continuous time threshold is considered as a battery of second type, and a charging or discharging operation is performed using the battery of second type.

In this embodiment, the above continuous time threshold is a threshold for warning against continuous time of high temperature which is represented by TNH (the warning value may be set flexibly, for example, may be set to 30 minutes, 15 minutes, 5 minutes, etc.).

The charging or discharging of the terminal controlled in consideration of the TN value only will be described below.

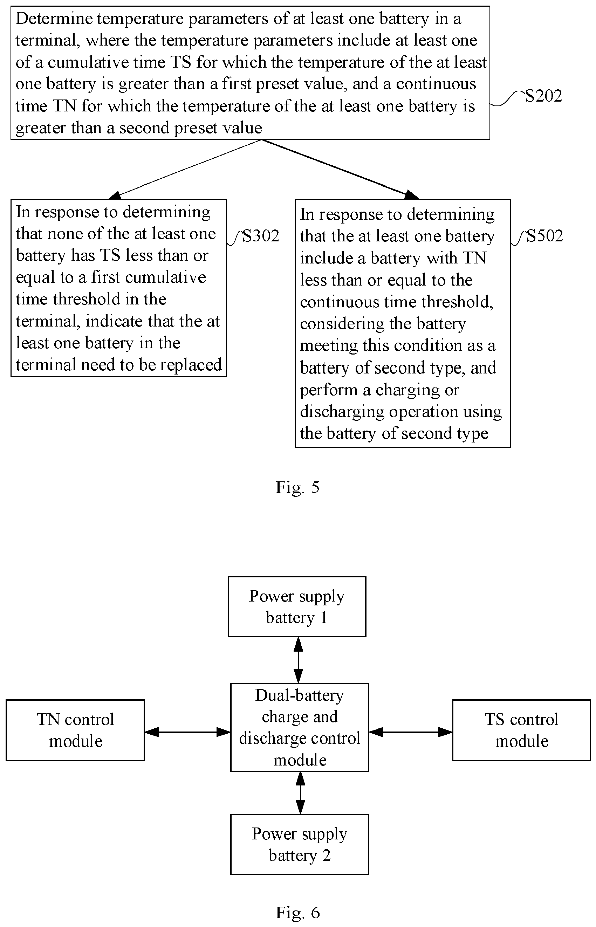

Fig. 5 is a third flowchart of a charge and discharge control method for a terminal according to an example not being part of the present invention. As shown in Fig. 5, when the temperature parameters include TN, step S204 includes a following step.

At step S502, when it is determined that the one or more batteries in the terminal include one or more batteries with TN less than or equal to the continuous time threshold, the one or more batteries meeting this condition are considered as one or more batteries of second type, and a charging or discharging operation is performed using the one or more batteries of second type.

In an embodiment, performing a charging or discharging operation using the battery or batteries of second type includes at least one of the following steps: when it is determined that the battery or batteries of second type include a battery with TS less than or equal to a second cumulative time threshold, the battery with TS less than or equal to the second cumulative time threshold is considered as a battery of third type, and a charging or discharging operation is performed using the battery of third type, where the second cumulative time threshold is less than the first cumulative time threshold; and when it is determined that the battery or batteries of second type do not include a battery with TS less than or equal to the second cumulative time threshold, a charging or discharging operation is performed according to a predetermined charging and discharging strategy. In this embodiment, the second cumulative time threshold is a general threshold of cumulative time of high-temperature, that is, a value less than the threshold for warning against cumulative time of high temperature, which is represented by TSL (exceeding the general threshold means that the cumulative time of high-temperature of the battery has reached a certain proportion of the threshold for warning. In some embodiments, the value of the general threshold is fixed or flexibly adjusted, and is taken in proportion to the threshold for warning against cumulative time of high temperature, for example, may be 50% of the threshold for warning against cumulative time of high temperature, or may be 30% of the threshold for warning against cumulative time of high temperature).

In an embodiment, performing a charging or discharging operation using the battery or batteries of third type includes: when the number of the batteries of third type is at least two, a charging or discharging operation is performed using the batteries of third type according to a predetermined charging and discharging strategy. In this embodiment, the predetermined charging and discharging strategy is a preset charging and discharging strategy (also called a default charging and discharging strategy, which may be an existing charging and discharging strategy. For example, for a terminal with two batteries, the preset charging and discharging strategy may be that one battery is fixedly charged or discharged first, and after the battery is fully charged or its power is lower than a preset value, the other battery is charged or discharged. Of course, the preset charging and discharging strategy may also be that the two batteries are charged or discharged simultaneously.

In an embodiment, before performing a discharging operation using the battery or batteries of third type, the method also includes: when it is determined that the battery or batteries of second type further include a battery with TS greater than the second cumulative time threshold, and the power of the battery with TS greater than the second cumulative time threshold exceeds a power threshold, the battery with TS greater than the second cumulative time threshold is discharged to a level equal to the power threshold. This embodiment is mainly directed to a case where a discharging operation is performed using a circuit in the terminal. In this embodiment, if there is a battery of second type with high power level (i.e., the power exceeds the power threshold, for example, the power is full), the battery of second type with high power level may be preferentially discharged until the power thereof decreases to the aforementioned power threshold.

In an embodiment, performing a discharging operation using the battery or batteries of second type includes: when it is determined that the batteries of second type include a battery with TS less than or equal to the second cumulative time threshold and a battery with TS greater than the second cumulative time threshold, and the battery with TS greater than the second cumulative time threshold is in a full power state, a discharging operation is performed according to a predetermined discharging strategy, where the second cumulative time threshold is less than the first cumulative time threshold. In this embodiment, the predetermined charging and discharging strategy is also a preset charging and discharging strategy, which is the same as that described in the foregoing embodiment, and will not be repeated here.

In an embodiment, when it is determined that there is a battery with TS less than or equal to the cumulative time threshold in the terminal, the method also includes: when it is determined that the batteries of first type do not include a battery with TN less than or equal to the continuous time threshold, an indication that the batteries in the terminal are in a long-term overheating state is performed. This embodiment is directed to the case where TN of each of the batteries of first type in the terminal is greater than the continuous time threshold, in this case, a user is indicated that the batteries of first type in the current terminal are in a long-term overheating state, and then the user is reminded that the batteries need to be subjected to heat reduction treatment. In this embodiment, there are various ways to indicate, for example, by generating a specific indicative sound (for example, giving an alarm sound), by voice, or by displaying text.

In an embodiment, after indicating that the batteries in the terminal are in a long-term overheating state, the method also includes: performing charging or discharging restriction on the batteries in the terminal; and when it is determined that the temperature of the batteries after charging or discharging restriction is reduced below a preset temperature, performing a charging or discharging operation using the batteries subjected to charging or discharging restriction. In this embodiment, there are various ways to perform charging or discharging restriction, for example, charging may be restricted by reducing a charging current, while discharging of the terminal may be restricted by starting a low power consumption mode (for example, reducing the brightness of screen display).

The present invention will be explained in combination with embodiments below.

First, a terminal with two batteries is taken as an example. In this embodiment, a structural block diagram of the terminal with two batteries is shown in Fig. 6. Each module in Fig. 6 will be described below.

The two batteries of the terminal include a power supply battery 1 and a power supply battery 2.

A TN control module is configured to execute a charge and discharge control strategy according to a stored continuous time of high-temperature TN up to now, including actively switching among batteries after TN exceeds a preset threshold.

A TS control module is configured to execute a charge and discharge control strategy according to a stored cumulative time of high-temperature TS, including adjusting a charging temperature threshold in several stages, adjusting a maximum charge power, switching to another battery for power supply after full charge of a battery, and the like.

A dual-battery charge and discharge control module is configured to control the charging of two batteries, switch a power supply battery, and the like.

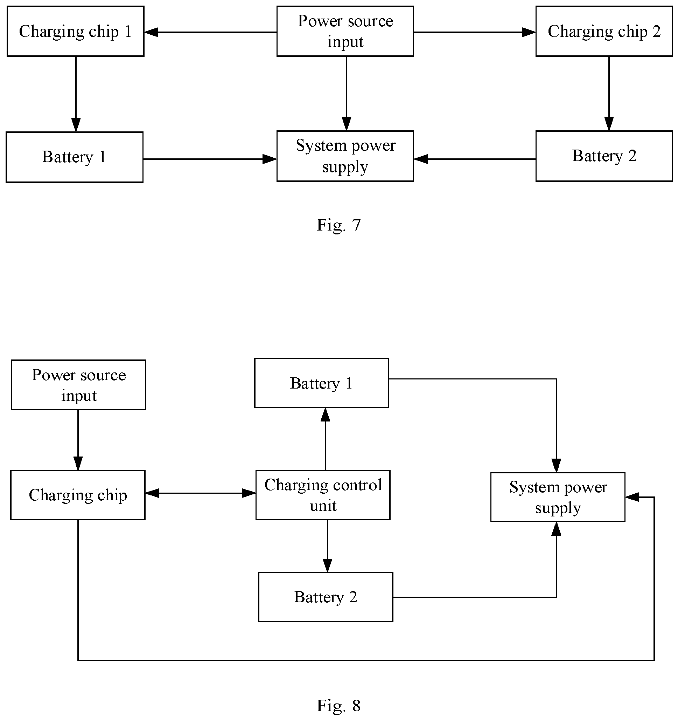

A scheme of charging of two batteries will be introduced below. Fig. 7 and Fig. 8 are basic block diagrams showing charging of two batteries.

Fig. 7 shows a scheme of charging two batteries simultaneously, each of batteries 1 and 2 having a special charging path, while Fig. 8 shows only one charging path, so that only one battery can be charged at one time, and which battery is to be charged is controlled by a charging control unit.

Charging and discharging processes are described below with reference to the accompanying drawings.

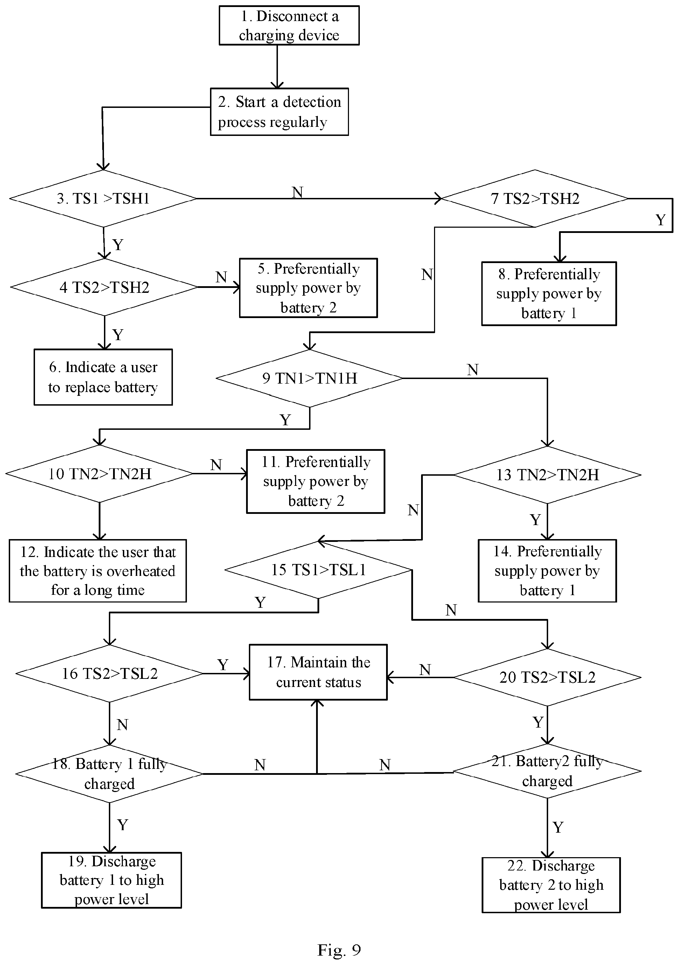

Fig. 9 is a flowchart showing power supply of a terminal with two batteries according to an embodiment of the present invention, including following steps.

At STEP 1, when a charging device is unplugged, a monitoring process is started regularly (corresponding to 1-2 in Fig. 9).

At STEP 2, when a value of TS1 reaches TSH1, the battery 1 is prone to swell. At this time, if a value of TS2 does not reach TSH2 and the battery 1 is in a high-temperature state, the battery 1 is switched to the battery 2 for power supply. If the battery 2 is low in power, the battery 1 is used to supply power and a user is indicated that the battery 1 needs to be replaced (corresponding to 3-5 in Fig. 9), and vice versa.

If both batteries reach the TSH1 and TSH2 values, the user is directly indicated that the batteries need to be replaced (corresponding to 6 in Fig. 9).

If both batteries do not reach the TSH1 and TSH2 values, go to STEP 3.

At STEP 3, if a value of TN1 reaches a preset threshold TN1H and a value of TN2 does not reach a preset threshold TN2H, the battery 1 is switched to the battery 2 for power supply (corresponding to 9-11 in Fig. 9). If the battery 2 is low in power, the battery 1 is used to supply power and the user is indicated that the battery is overheated, and vice versa, so as to make the two batteries be used uniformly at high temperature as much as possible.

If both batteries reach TN1H and TN2H, the user is indicated that the mobile phone is overheated (corresponding to 12 in Fig. 9).

If both batteries do not reach TN1H and TN2H, the process proceeds to STEP 4.

At STEP 4, if the value of TS1 exceeds TSL1 and the value of TS2 does not exceed TSL2, and at this time, if the battery 1 is in a full power state, the battery 1 is discharged to a high power threshold (such as 70% of its capacity) (corresponding to 15, 16, 18-19 in Fig. 9). If the battery 1 is low in power, the battery 2 is used to supply power, and vice versa.

If both batteries reach TSL1 and TSL2, or both batteries do not reach TSL1 and TSL2, a current power supply strategy is maintained (corresponding to 17 in Fig. 9).

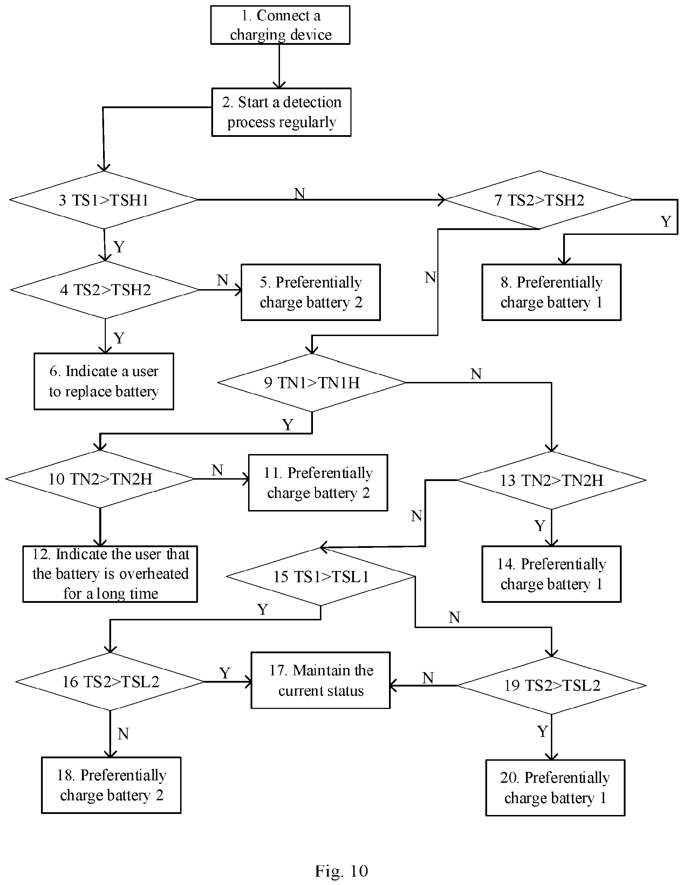

Fig. 10 is a flowchart showing charging of a terminal with two batteries according to an embodiment of the present invention, including following steps.

At STEP 1, when a charging device is connected to the terminal, a monitoring process is started regularly (corresponding to 1-2 in Fig. 10).

At STEP 2, when the value of TS1 reaches TSH1, the battery 1 is prone to swell. At this time, if the value of TS2 does not reach TSH2 and the battery 1 is in a high-temperature state (higher than 45°C), the battery 2 is charged and charging of the battery 1 is disabled (corresponding to 3-5 in Fig. 10), and vice versa.

If both batteries reach the TSH1 and TSH2, the user is directly indicated that the batteries need to be replaced (corresponding to 6 in Fig. 10).

If both batteries do not reach the TSH1 and TSH2 values (corresponding to 3 and 7 in Fig. 10), the process proceeds to STEP 3.

At STEP 3, if the value of TN1 reaches a preset threshold TN1H and the value of TN2 does not reach a preset threshold TN2H, the battery 2 is switched to be charged (corresponding to 9-11 in Fig. 10). If the battery 2 is fully charged, a battery maximum temperature in a charging scenario of the battery 1 is limited, and vice versa, so as to make the two batteries be used uniformly at high temperature as much as possible.

If both batteries reach TN1H and TN2H, the user is indicated that the mobile phone is overheated (corresponding to 12 in Fig. 10).

If both batteries do not reach TN1H and TN2H (corresponding to 9 and 13 in Fig. 10), the process proceeds to STEP 4; if the value of TN1 does not reach TN1H and the value of TN2 reaches TN2H, the battery 1 is charged preferentially (corresponding to 14 in Fig. 10).

At STEP 4, if the value of TS1 exceeds TSL1 and the value of TS2 does not exceed TSL2, the battery 2 is charged (corresponding to 15-16 and 18 in Fig. 10). If the battery 2 is fully charged, the battery 1 is then charged, and vice versa (corresponding to 15, 19-20 in Fig. 10).

If both batteries reach TSL1 and TSL2, or both batteries do not reach TSL1 and TSL2, a current charging strategy is maintained (corresponding to 17 in Fig. 10).

It can be seen from the above charging and discharging scheme of a terminal with two batteries that the charging and discharging process control of the two batteries is performed according to the battery temperature and the stored cumulative time of high-temperature in an embodiment of the present invention, so that the safety of the batteries can be ensured while completing the charging and discharging operations of the two batteries, and swelling can be avoided.

The foregoing embodiments are directed to the charging or discharging process of a terminal with two batteries. A charging process of a single battery will be described below.

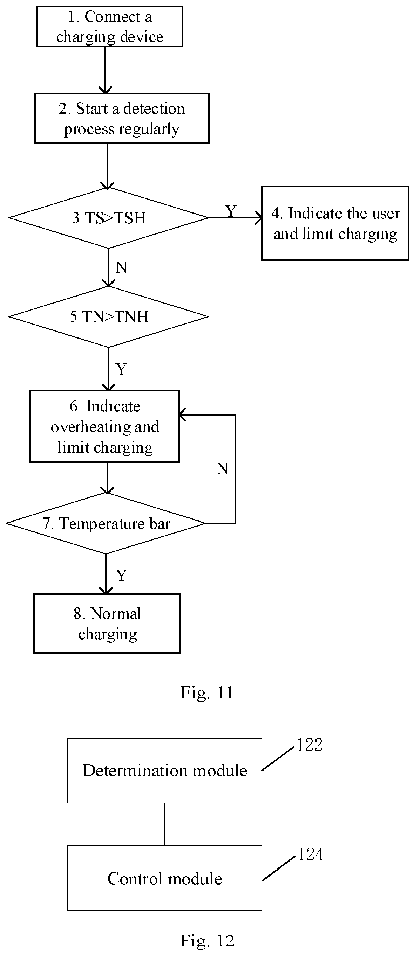

Fig. 11 is a flowchart showing charging of a single battery according to an embodiment, including following steps.

At STEP 1, when a charging device is connected to the terminal, a monitoring process is started regularly (corresponding to 1-2 in Fig. 11).

At STEP 2, when the value of TS reaches TSH, the battery is prone to swell. An indication that the battery needs to be replaced is performed, the maximum battery temperature during charging is limited to a predetermined temperature (for example, 45°C) and the maximum charging power is limited to a high power threshold (for example, 70% of its capacity) (corresponding to 3-4 in Fig. 11). Otherwise, the process proceeds to STEP 3.

At STEP 3, if the value of TN reaches a preset threshold TNH, the user is indicated that the battery is overheated, and charging is stopped until the battery temperature is lower than TNH by 3°C, and then charging is resumed (corresponding to 5-8 in Fig. 11).

With the description of the above embodiments, those having ordinary skills in the art will clearly understand that the method according to the above embodiments may be implemented by software and a necessary general hardware platform, and of course may also be implemented by hardware alone, but in many cases the former is a better implementation. Based on such an understanding, the technical schemes of the present invention essentially or a portion thereof contributing to the existing technology may be embodied in the form of a software product stored in a non-transitory computer-readable storage medium (e.g., ROM/RAM, magnetic disk, optical disk), including several instructions for causing a terminal device (which may be a mobile phone, computer, server, or network device, etc.) to perform the methods described in the various embodiments of the present invention.

In this embodiment, a charging and discharging control apparatus for a terminal is also provided, and the apparatus is used to implement the foregoing embodiments and implementations, and details of which are already described and are not repeated here. As used below, the term "module" may be a combination of software and/or hardware that implements a predetermined function. Although the apparatuses described in the embodiments below are implemented in software, an implementation in hardware or a combination of software and hardware is also possible and contemplated.

Fig. 12 is a block diagram showing a configuration of a charge and discharge control apparatus for a terminal according to an embodiment of the present invention. As shown in Fig. 12, the apparatus includes: a determination module 122 configured to determine temperature parameters of one or more batteries in a terminal, where the temperature parameters include a cumulative time TS for which the temperature of the battery is greater than a first preset value, and a continuous time TN for which the temperature of the battery is greater than a second preset value; and a control module 124 configured to perform charge and discharge control on the one or more batteries in the terminal according to the temperature parameters.

The control module 124 is configured to perform at least one of the following operations: when it is determined that there is no battery with TS less than or equal to a first cumulative time threshold in the terminal, indicating that the battery in the terminal needs to be replaced; and in response to determining that there is a battery with TS less than or equal to the first cumulative time threshold in the terminal, considering the battery with TS less than or equal to the first cumulative time threshold as a battery of first type, and performing a charging or discharging operation using the battery of first type.

The control module 124 is configured to perform charging and discharging operations using the battery of first type by: when it is determined that the battery or batteries of first type include a battery with TN less than or equal to a continuous time threshold, considering the battery with TN less than or equal to the continuous time threshold as a battery of second type, and performing a charging or discharging operation using the battery of second type.

In an example not being part of the present invention, when the temperature parameters includes TN, the control module 124 is configured to perform the following operations: when it is determined that one or more batteries in the terminal include one or more batteries with TN less than or equal to the continuous time threshold, the one or more batteries meeting this condition are determined as one or more batteries of second type, and a charging or discharging operation is performed using the one or more batteries of second type.

In an alternative embodiment, the control module 124 is configured to perform charging and discharging operations using the battery or batteries of second type in at least one of the following manners: when it is determined that the battery or batteries of second type include a battery with TS less than or equal to a second cumulative time threshold, the battery with TS less than or equal to the second cumulative time threshold is considered to be a battery of third type, and a charging or discharging operation is performed using the battery of third type, where the second cumulative time threshold is less than the first cumulative time threshold; and when it is determined that the battery or batteries of second type do not include a battery with TS less than or equal to the second cumulative time threshold, a charging or discharging operation is performed according to a predetermined charging and discharging strategy.

In an alternative embodiment, the control module 124 is configured to perform charging and discharging operations using the battery or batteries of third type by: when the number of the batteries of third type is at least two, performing a charging or discharging operation using the batteries of third type according to a predetermined charging and discharging strategy.

In an alternative embodiment, the control module 124 is configured to perform, before performing charging and discharging operations using the battery or batteries of third type: when it is determined that the battery or batteries of second type further include a battery with TS greater than the second cumulative time threshold, and the power of the battery with TS greater than the second cumulative time threshold exceeds a power threshold, discharging the battery with TS greater than the second cumulative time threshold to a level equal to the power threshold.

In an alternative embodiment, the control module 124 is configured to perform charging and discharging operations using the battery or batteries of second type by: when it is determined that the batteries of second type include a battery with TS less than or equal to the second cumulative time threshold and a battery with TS greater than the second cumulative time threshold, and the battery with TS greater than the second cumulative time threshold is in a full power state, performing a discharging operation according to a predetermined discharging strategy, where the second cumulative time threshold is less than the first cumulative time threshold.

In an alternative embodiment, when it is determined that there is a battery with TS less than or equal to the cumulative time threshold in the terminal, the control module 124 is also configured to, when it is determined that the battery or batteries of first type do not include a battery with TN less than or equal to the continuous time threshold, indicate that the batteries in the terminal are in a long-term overheating state.

In an alternative embodiment, after indicating that the batteries in the terminal are in a long-term overheating state, the control module 124 is also configured to perform charging or discharging restriction on the batteries in the terminal; and when it is determined that the temperature of the batteries after charging or discharging restriction is reduced below a preset temperature, perform a charging or discharging operation using the batteries subjected to charging or discharging restriction.

It should be noted that the above modules may be implemented by software or hardware, and the latter may be implemented in the following manner, but is not limited thereto: the above modules locate in a same processor; alternatively, the above modules are respectively located in different processors, in any combination.

An example not being part of the present invention also provides a non-transitory computer-readable storage medium storing a computer program, which, when executed, performs the steps in any of the method embodiments described above.

In an alternative example not being part of the present invention, the non-transitory computer-readable storage medium includes, but is not limited to, a USB flash drive, a read-only memory (ROM), a random-access memory (RAM), a removable hard disk, a magnetic disk, an optical disc, or any other medium capable of storing a computer program.

An example not being part of the present invention also provides an electronic apparatus including a memory and a processor, where the memory stores a computer program which, when executed by the processor, causes the processor to perform the steps in any of the method embodiments described above.

In an alternative example not being part of the present invention, the electronic apparatus also includes a transmission device connected to the processor and an input/output device connected to the processor.

Various implementations of this embodiment can be referred to the implementations described above in the foregoing embodiments, which are not described herein again.

One or more embodiments of the present invention are provided to explain an effect of improving battery safety, reducing failure due to swelling, and extending battery life.

According to one or more embodiments of the present invention, the charging or discharging of the terminal is controlled according to the temperature parameters of the battery, that is to say, when using the terminal to charge and discharge, the temperature parameters of the battery are considered comprehensively, so that the battery is prevented from being frequently used for charging or discharging at high temperature, thus solving a problem in the existing technology that when the battery in the terminal is used for charging and discharging for a long time, the battery may swell and cause a safety accident. Therefore, the effects of improving battery safety, reducing swelling phenomena, and ensuring the use safety of the terminal are effectively achieved.

It will be apparent to those having ordinary skills in the art that the modules or steps of the present invention described above may be implemented by a general-purpose computing device, which may be centralized on a single computing device, or distributed over a network of multiple computing devices, and optionally may be implemented by program code executable by the computing device, so that they may be stored in a storage device and executed by the computing device, and in some cases may be implemented by performing the steps shown or described in a sequence different from that herein, or may be separately fabricated into individual integrated circuit modules, or some of them in part may be fabricated into individual integrated circuit modules. Thus, the invention is not limited to any particular combination of hardware and software.

The foregoing description is merely several embodiments of the present invention and is not intended to limit the present invention. Various modifications and variations may be made to the present invention by those having ordinary skills in the art. Any modifications, equivalent substitutions, improvements, etc. made within the principles of the invention shall be within the scope of protection of the invention as defined by the appended claims.

## Claims

1. A charge and discharge control method for a terminal, comprising:
determining temperature parameters of at least one battery in the terminal, wherein the temperature parameters comprise a cumulative time TS for which the temperature of the at least one battery is greater than a first preset value, and a continuous time TN during which the temperature of the at least one battery is kept greater than a second preset value (S202); and
performing charge and discharge control on the at least one battery in the terminal according to the temperature parameters (S204),
**characterized in that**, performing charge and discharge control on the at least one battery in the terminal according to the temperature parameters (S204) comprises following operations,
in response to determining that a respective one of the at least one battery has TS less than or equal to the first cumulative time threshold in the terminal, considering the respective one of the at least one battery as a battery of first type, and performing a charging or discharging operation using the battery of first type (S304);
wherein, performing a charging or discharging operation using the battery of first type comprises,
in response to determining that a respective battery of first type has TN less than or equal to a continuous time threshold, considering the respective battery of first type as a battery of second type, and performing a charging or discharging operation using the battery of second type (S402).

2. The method of claim 1, wherein performing charge and discharge control on the at least one battery in the terminal according to the temperature parameters (S204) further comprises the following:
in response to determining that none of the at least one battery has TS less than or equal to a first cumulative time threshold in the terminal, indicating that the at least one battery in the terminal need to be replaced (S302).

3. The method of claim 1, wherein performing charge and discharge control on the at least one battery in the terminal according to the temperature parameters (S204) further comprises:
in response to determining that a respective one of the at least one battery has TN less than or equal to the continuous time threshold, considering the respective one of the at least one battery as a battery of second type, and performing a charging or discharging operation using the battery of second type (S502).

4. The method of claim 1 or 3, wherein performing a charging or discharging operation using the battery of second type comprises:
in response to determining that a respective battery of second type has TS less than or equal to a second cumulative time threshold, considering the respective battery of second type as a battery of third type, and performing a charging or discharging operation using the battery of third type; and
in response to determining an absence of a battery of second type with TS less than or equal to the second cumulative time threshold, performing a charging or discharging operation according to a first predetermined charging and discharging strategy.

5. The method of claim 4, wherein performing a charging or discharging operation using the battery of third type comprises:
in response to a presence of at least two batteries of third type, performing a charging or discharging operation using the batteries of third type according to a second predetermined charging and discharging strategy; wherein, the second predetermined charging and discharging strategy at least comprises that, a first battery of the batteries of third type is fixedly charged or dis-charged first, and after the first battery of the batteries of third type is fully charged or the power of the first battery of the batteries of third type is lower than a preset value, a second battery of the batteries of third type is charged or discharged, or both the first and second batteries of the batteries of third type are charged or discharged simultaneously.

6. The method of claim 4, wherein before performing a charging or discharging operation using the battery of third type, the method further comprises:
in response to determining that a respective battery of second type has TS greater than the second cumulative time threshold, and the power of the respective battery of second type with TS greater than the second cumulative time threshold exceeds a power threshold, discharging the respective battery of second type to the power threshold.

7. The method of claim 1 or 3, wherein the battery of second type is one of a plurality of batteries of second type comprising a first battery of second type and a second battery of second type, and performing a discharging operation using the battery of second type comprises:
in response to determining that a first battery of second type has TS less than or equal to the second cumulative time threshold, a second battery of second type has TS greater than the second cumulative time threshold, and the second battery of second type is fully charged, performing a discharging operation according to a third predetermined discharging strategy; wherein, the third predetermined charging and discharging strategy at least comprises that, the first battery of second type is fixedly charged or dis-charged first, and after the first battery of second type is fully charged or the power of the first battery of second type is lower than a preset value, the second battery of second type is charged or discharged, or both the first and second batteries of second type are charged or discharged simultaneously.

8. The method of claim 1, wherein in response to determining that a respective one of the at least one battery has TS less than or equal to the cumulative time threshold in the terminal, the method further comprises:
in response to determining an absence of a battery of first type with TN less than or equal to the continuous time threshold, indicating that the at least one battery in the terminal are in a long-term overheating state.

9. The method of claim 8, wherein after indicating that the at least one battery in the terminal are in a long-term overheating state, the method further comprises:
performing charging or discharging restriction on the at least one battery in the terminal; and
in response to determining that the temperature of the at least one battery after charging or discharging restriction is reduced below a predetermined temperature, performing a charging or discharging operation using the at least one battery subjected to charging or discharging restriction.

10. A charge and discharge control apparatus for a terminal, comprising:
a determination module configured to determine temperature parameters of at least one battery in a terminal, wherein the temperature parameters comprise a cumulative time TS for which the temperature of the at least one battery is greater than a first preset value, and a continuous time TN during which the temperature of the at least one battery is kept greater than a second preset value (122); and
a control module configured to perform charge and discharge control on the at least one battery in the terminal according to the temperature parameters (124),
**characterized in that**, performance of charge and discharge control on the at least one battery in the terminal according to the temperature parameters (124) comprises following operations,
in response to determining that a respective one of the at least one battery has TS less than or equal to the first cumulative time threshold in the terminal, considering the respective one of the at least one battery as a battery of first type, and performing a charging or discharging operation using the battery of first type (S304);
wherein, performing a charging or discharging operation using the battery of first type comprises,
in response to determining that a respective battery of first type has TN less than or equal to a continuous time threshold, considering the respective battery of first type as a battery of second type, and performing a charging or discharging operation using the battery of second type (S402).

11. The apparatus of claim 10, wherein the control module is further configured to perform following operation:
in response to determining that none of the at least one battery has TS less than or equal to a first cumulative time threshold in the terminal, indicating that the at least one battery in the terminal need to be replaced.

## Patentansprüche

1. Lade- und Entladesteuerverfahren für ein Endgerät, umfassend:
Bestimmen von Temperaturparametern von mindestens einer Batterie in dem Endgerät, wobei die Temperaturparameter eine kumulative Zeit TS, für die die Temperatur der mindestens einen Batterie größer als ein erster voreingestellter Wert ist, und eine kontinuierliche Zeit TN, während der die Temperatur der mindestens einen Batterie größer als ein zweiter voreingestellter Wert gehalten wird, umfassen (S202); und
Ausführen einer Lade- und Entladesteuerung an der mindestens einen Batterie in dem Endgerät gemäß den Temperaturparametern (S204),
**dadurch gekennzeichnet, dass** ein Ausführen der Lade- und Entladesteuerung an der mindestens einen Batterie in dem Endgerät gemäß den Temperaturparametern (S204) folgende Vorgänge umfasst,
als Reaktion auf ein Bestimmen, dass eine jeweilige der mindestens einen Batterie eine TS kleiner als oder gleich wie der erste kumulative Zeitschwellenwert in dem Endgerät aufweist, Betrachten der jeweiligen der mindestens einen Batterie als eine Batterie vom ersten Typs und Ausführen eines Lade- oder Entladevorgangs unter Verwendung der Batterie vom ersten Typ (S304);
wobei ein Ausführen eines Lade- oder Entladevorgangs unter Verwendung der Batterie vom ersten Typ Folgendes umfasst,
als Reaktion auf ein Bestimmen, dass eine jeweilige Batterie vom ersten Typ eine TN kleiner als oder gleich wie ein kontinuierlicher Zeitschwellenwert aufweist, Betrachten der jeweiligen Batterie vom ersten Typ als eine Batterie vom zweiten Typ und Ausführen eines Lade- oder Entladevorgangs unter Verwendung der Batterie vom zweiten Typ (S402).

2. Verfahren nach Anspruch 1, wobei ein Ausführen einer Lade- und Entladesteuerung für die mindestens eine Batterie in dem Endgerät gemäß den Temperaturparametern (S204) ferner das Folgende umfasst:
als Reaktion auf ein Bestimmen, dass keine von der mindestens einen Batterie eine TS von weniger als oder gleich wie ein erster kumulativer Zeitschwellenwert in dem Endgerät aufweist, Angeben, dass die mindestens eine Batterie in dem Endgerät ersetzt werden muss (S302).

3. Verfahren nach Anspruch 1, wobei ein Ausführen einer Lade- und Entladesteuerung für die mindestens eine Batterie in dem Endgerät gemäß den Temperaturparametern (S204) ferner Folgendes umfasst:
als Reaktion auf ein Bestimmen, dass eine jeweilige der mindestens einen Batterie eine TN kleiner als oder gleich wie der kontinuierliche Zeitschwellenwert ist, Betrachten der jeweiligen der mindestens einen Batterie als eine Batterie vom zweiten Typ und Ausführen eines Lade- oder Entladevorgangs unter Verwendung der Batterie vom zweiten Typ (S502).

4. Verfahren nach Anspruch 1 oder 3, wobei ein Ausführen eines Lade- oder Entladevorgangs unter Verwendung der Batterie vom zweiten Typ Folgendes umfasst:
als Reaktion auf ein Bestimmen, dass eine jeweilige Batterie vom zweiten Typ eine TS von weniger als oder gleich wie ein zweiter kumulativer Zeitschwellenwert aufweist, Betrachten der jeweiligen Batterie vom zweiten Typ als eine Batterie vom dritten Typ und Ausführen eines Lade- oder Entladevorgang unter Verwendung der Batterie vom dritten Typ; und
als Reaktion auf ein Bestimmen eines Nichtvorhandenseins einer Batterie vom zweiten Typ mit einer TS kleiner als oder gleich wie der zweite kumulative Zeitschwellenwert, Ausführen eines Lade- oder Entladevorgangs gemäß einer ersten vorbestimmten Lade- und Entladestrategie.

5. Verfahren nach Anspruch 4, wobei ein Ausführen eines Lade- oder Entladevorgangs unter Verwendung der Batterie vom dritten Typ Folgendes umfasst:
als Reaktion auf ein Vorhandensein von mindestens zwei Batterien vom dritten Typ, Ausführen eines Lade- oder Entladevorgangs unter Verwendung der Batterien vom dritten Typ gemäß einer zweiten vorbestimmten Lade- und Entladestrategie; wobei die zweite vorbestimmte Lade- und Entladestrategie mindestens umfasst, dass eine erste Batterie der Batterien vom dritten Typ zuerst fest aufgeladen oder zuerst entladen wird, und nachdem die erste Batterie der Batterien vom dritten Typ vollständig aufgeladen ist oder die Leistung der ersten Batterie der Batterien vom dritten Typ niedriger ist als ein voreingestellter Wert, eine zweite Batterie der Batterien vom dritten Typ aufgeladen oder entladen wird, oder sowohl die erste als auch die zweite Batterie der Batterien vom dritten Typ gleichzeitig aufgeladen oder entladen werden.

6. Verfahren nach Anspruch 4, wobei das Verfahren vor einem Ausführen eines Lade- oder Entladevorgangs unter Verwendung der Batterie vom dritten Typ ferner Folgendes umfasst:
als Reaktion auf ein Bestimmen, dass eine jeweilige Batterie vom zweiten Typ eine TS größer als der zweite kumulative Zeitschwellenwert aufweist, und dass die Leistung der jeweiligen Batterie vom zweiten Typ mit einer TS größer als der zweite kumulative Zeitschwellenwert einen Leistungsschwellenwert überschreitet, Entladen der jeweiligen Batterie vom zweiten Typ auf den Leistungsschwellenwert.

7. Verfahren nach Anspruch 1 oder 3, wobei die Batterie vom zweiten Typ eine von mehreren Batterien vom zweiten Typ ist, umfassend eine erste Batterie vom zweiten Typ und eine zweite Batterie vom zweiten Typ, und ein Ausführen eines Entladevorgangs unter Verwendung der Batterie vom zweiten Typ Folgendes umfasst:
als Reaktion auf ein Bestimmen, dass eine erste Batterie vom zweiten Typ eine TS aufweist, die kleiner als oder gleich wie der zweite kumulative Zeitschwellenwert ist, dass eine zweite Batterie vom zweiten Typ eine TS aufweist, die größer als der zweite kumulative Zeitschwellenwert ist, und dass die zweite Batterie vom zweiten Typ vollständig geladen ist, Ausführen eines Entladevorgangs gemäß einer dritten vorbestimmten Entladestrategie;
wobei die dritte vorbestimmte Lade- und Entladestrategie mindestens umfasst, dass die erste Batterie vom zweiten Typ zuerst fest aufgeladen oder entladen wird, und nachdem die erste Batterie vom zweiten Typ vollständig aufgeladen ist oder die Leistung der ersten Batterie vom zweiten Typ niedriger ist als ein voreingestellter Wert, die zweite Batterie vom zweiten Typ aufgeladen oder entladen wird, oder sowohl die erste als auch die zweite Batterie vom zweiten Typ gleichzeitig aufgeladen oder entladen werden.

8. Verfahren nach Anspruch 1, wobei das Verfahren als Reaktion auf ein Bestimmen, dass eine jeweilige der mindestens einen Batterie eine TS kleiner als oder gleich wie der kumulative Zeitschwellenwert in dem Endgerät aufweist, ferner Folgendes umfasst:
als Reaktion auf ein Bestimmen eines Nichtvorhandenseins einer Batterie vom ersten Typ mit einer TN kleiner als oder gleich wie der kontinuierliche Zeitschwellenwert, Angeben, dass die mindestens eine Batterie in dem Endgerät in einem Langzeit-Überhitzungszustand ist.

9. Verfahren nach Anspruch 8, wobei das Verfahren nach Angeben, dass die mindestens eine Batterie in dem Endgerät in einem Langzeit-Überhitzungszustand ist, ferner Folgendes umfasst:
Ausführen einer Lade- oder Entladebeschränkung an der mindestens eine Batterie in dem Endgerät; und
als Reaktion auf ein Bestimmen, dass die Temperatur der mindestens einen Batterie nach der Lade- oder Entladebeschränkung unter eine vorbestimmte Temperatur gesunken ist, Ausführen eines Lade- oder Entladevorgangs unter Verwendung der mindestens einen Batterie, die der Lade- oder Entladebeschränkung unterliegt.

10. Lade- und Entladesteuervorrichtung für ein Endgerät, umfassend:
ein Bestimmungsmodul, das konfiguriert ist, um Temperaturparameter von mindestens einer Batterie in dem Endgerät zu bestimmen, wobei die Temperaturparameter eine kumulative Zeit TS, für die die Temperatur der mindestens einen Batterie größer als ein erster voreingestellter Wert ist, und eine kontinuierliche Zeit TN, während der die Temperatur der mindestens einen Batterie größer als ein zweiter voreingestellter Wert gehalten wird, umfassen (122); und
ein Steuermodul, das konfiguriert ist, um eine Lade- und Entladesteuerung an der mindestens einen Batterie in dem Endgerät gemäß den Temperaturparametern auszuführen (124),
**dadurch gekennzeichnet, dass** ein Ausführen der Lade- und Entladesteuerung an der mindestens einen Batterie in dem Endgerät gemäß den Temperaturparametern (124) folgende Vorgänge umfasst,
als Reaktion auf ein Bestimmen, dass eine jeweilige der mindestens einen Batterie eine TS kleiner als oder gleich wie der erste kumulative Zeitschwellenwert in dem Endgerät aufweist, Betrachten der jeweiligen der mindestens einen Batterie als eine Batterie vom ersten Typs und Ausführen eines Lade- oder Entladevorgangs unter Verwendung der Batterie vom ersten Typ (S304);
wobei ein Ausführen eines Lade- oder Entladevorgangs unter Verwendung der Batterie vom ersten Typ Folgendes umfasst,
als Reaktion auf ein Bestimmen, dass eine jeweilige Batterie vom ersten Typ eine TN kleiner als oder gleich wie ein kontinuierlicher Zeitschwellenwert aufweist, Betrachten der jeweiligen Batterie vom ersten Typ als eine Batterie vom zweiten Typ und Ausführen eines Lade- oder Entladevorgangs unter Verwendung der Batterie vom zweiten Typ (S402).

11. Vorrichtung nach Anspruch 10, wobei das Steuermodul ferner konfiguriert ist, um folgenden Vorgang auszuführen:
als Reaktion auf ein Bestimmen, dass keine von der mindestens einen Batterie eine TS von weniger als oder gleich wie ein erster kumulativer Zeitschwellenwert in dem Endgerät aufweist, Angeben, dass die mindestens eine Batterie in dem Endgerät ersetzt werden muss.

## Revendications

1. Procédé de contrôle de charge et de décharge d'un terminal comprenant :
la détermination des paramètres de température d'au moins une batterie dans le terminal, dans lequel lesdits paramètres de température comprenant un temps cumulé TS pendant lequel la température de l'au moins une batterie est supérieure à une première valeur prédéfinie, et un temps continu TN pendant lequel la température de l'au moins une batterie est maintenue supérieure à une deuxième valeur prédéfinie (S202) ; et
la réalisation des opérations de contrôle de charge et de décharge sur l'au moins une batterie dans le terminal en fonction des paramètres de température (S204),
**caractérisée en ce que**, la réalisation de l'opération de contrôle de charge et de décharge sur l'au moins une batterie dans le terminal en fonction des paramètres de température (S204) comprend les opérations suivantes,
en réponse à la détermination de ce qu'une batterie respective de l'au moins une batterie a un TS inférieur ou égal au premier seuil de temps cumulé dans le terminal, considérer la batterie respective de l'au moins une batterie comme une batterie de premier type, et effectuer l'opération de charge ou de décharge à l'aide la batterie de premier type (S304) ;
dans lequel, la réalisation de l'opération de charge ou de décharge à l'aide de la batterie de premier type comprenant,
en réponse à la détermination de ce qu'une batterie respective de premier type a un TN inférieur ou égal à un seuil de temps continu, considérer la batterie respective de premier type comme une batterie de deuxième type, et effectuer l'opération de charge ou de décharge à l'aide de la batterie de deuxième type (S402).

2. Procédé selon la revendication 1, dans lequel la réalisation de l'opération de contrôle de charge et de décharge sur l'au moins une batterie dans le terminal en fonction des paramètres de température (S204) comprend en outre les opérations suivantes :
en réponse à la détermination de ce qu'aucune de l'au moins une batterie n'a un TS inférieur ou égal à un premier seuil de temps cumulé dans le terminal, indiquer que l'au moins une batterie dans le terminal doit être remplacée (S302).

3. Procédé selon la revendication 1, dans lequel la réalisation de l'opération de contrôle de charge et de décharge sur l'au moins une batterie dans le terminal en fonction des paramètres de température (S204) comprend en outre :
en réponse à la détermination de ce qu'une batterie respective de l'au moins une batterie a un TN inférieur ou égal au seuil de temps continu, considérer la batterie respective de l'au moins une batterie comme une batterie de deuxième type, et effectuer l'opération de charge ou de décharge à l'aide la batterie de deuxième type (S502).

4. Procédé selon la revendication 1 ou 3, dans lequel la réalisation de l'opération de charge ou de décharge à l'aide de la batterie de deuxième type comprend :
en réponse à la détermination de ce qu'une batterie respective de deuxième type a un TS inférieur ou égal à un deuxième seuil de temps cumulé, considérer la batterie respective de deuxième type comme une batterie de troisième type, et effectuer l'opération de charge ou de décharge à l'aide de la batterie de troisième type ; et
en réponse à la détermination d'une absence de batterie de deuxième type avec un TS inférieur ou égal au deuxième seuil de temps cumulé, effectuer une opération de charge ou de décharge en fonction d'une première stratégie prédéterminée de charge et de décharge.

5. Procédé selon la revendication 4, dans lequel la réalisation de l'opération de charge ou de décharge à l'aide de la batterie de troisième type comprend :
en réponse à la présence d'au moins deux batteries de troisième type, effectuer une opération de charge ou de décharge à l'aide des batteries de troisième type en fonction d'une deuxième stratégie de charge et de décharge prédéterminée ; dans laquelle la deuxième stratégie prédéterminée de charge et de décharge comprend au moins le fait qu'une première batterie des batteries de troisième type est d'abord chargée ou déchargée de manière fixe, et après que la première batterie des batteries de troisième type est entièrement chargée ou que la puissance de la première batterie des batteries de troisième type est inférieure à une valeur prédéfinie, une deuxième batterie des batteries de troisième type est chargée ou déchargée, ou que la première et la deuxième batterie des batteries de troisième type sont toutes deux chargées ou déchargées en même temps.

6. Procédé selon la revendication 4, dans lequel avant la réalisation de l'opération de charge ou de décharge à l'aide de la batterie de troisième type, le procédé comprend en outre :
en réponse à la détermination de ce qu'une batterie respective de deuxième type a un TS supérieur au deuxième seuil de temps cumulé, et que la puissance de la batterie respective de deuxième type avec TS supérieur au deuxième seuil de temps cumulé dépasse un seuil de puissance, décharger la batterie respective de deuxième type jusqu'au seuil de puissance.

7. Procédé selon la revendication 1 ou 3, dans lequel la batterie de deuxième type fait partie d'une pluralité de batteries de deuxième type comprenant une première batterie de deuxième type et une deuxième batterie de deuxième type, et effectuer une opération de décharge à l'aide de la batterie de deuxième type comprend :
en réponse à la détermination de ce qu'une première batterie de deuxième type a un TS inférieur ou égal au deuxième seuil de temps cumulé, qu'une deuxième batterie de deuxième type a un TS supérieur au deuxième seuil de temps cumulé, et que la deuxième batterie de deuxième type est complètement chargée, effectuer une opération de décharge selon une troisième stratégie de décharge prédéterminée ; dans laquelle la troisième stratégie prédéterminée de charge et de décharge comprend au moins le fait que la première batterie de deuxième type est d'abord chargée ou déchargée de manière fixe, et après que la première batterie de deuxième type est entièrement chargée ou que la puissance de la première batterie de deuxième type est inférieure à une valeur prédéfinie, la deuxième batterie de deuxième type est chargée ou déchargée, ou la première et la deuxième batterie de deuxième type sont chargées ou déchargées en même temps.

8. Procédé selon la revendication 1, dans lequel en réponse à la détermination qu'une batterie respective de l'au moins une batterie a un TS inférieur ou égal au seuil de temps cumulé dans le terminal, le procédé comprend en outre :
en réponse à la détermination d'une absence de batterie de premier type avec un TN inférieur ou égal au seuil de temps continu, indiquer que l'au moins une batterie dans le terminal est dans un état de surchauffe à long terme.

9. Procédé selon la revendication 8, dans lequel après avoir indiqué que l'au moins une batterie dans le terminal est dans un état de surchauffe à long terme, le procédé comprend en outre :
la réalisation de la restriction de charge ou de décharge sur l'au moins une batterie dans le terminal ; et
en réponse à la détermination de ce que la température de l'au moins une batterie après la restriction de charge ou de décharge est réduite en deçà d'une température prédéterminée, effectuer l'opération de charge ou de décharge à l'aide de l'au moins une batterie sujette à la restriction de charge ou de décharge.

10. Appareil de contrôle de charge et de décharge d'un terminal comprenant :
un module de détermination configuré pour déterminer les paramètres de température d'au moins une batterie dans un terminal, dans lequel lesdits paramètres de température comprenant un temps cumulé TS pendant lequel la température de l'au moins une batterie est supérieure à une première valeur prédéfinie, et un temps continu TN pendant lequel la température de l'au moins une batterie est maintenue supérieure à une deuxième valeur prédéfinie (122) ; et
un module de contrôle configuré pour effectuer les opérations de contrôle de charge et de décharge sur l'au moins une batterie dans le terminal en fonction des paramètres de température (124) ;
**caractérisé en ce que**, la réalisation de l'opération de contrôle de charge et de décharge sur l'au moins une batterie dans le terminal en fonction des paramètres de température (124) comprend les opérations suivantes,
en réponse à la détermination de ce qu'une batterie respective de l'au moins une batterie a un TS inférieur ou égal au premier seuil de temps cumulé dans le terminal, considérer la batterie respective de l'au moins une batterie comme une batterie de premier type, et effectuer l'opération de charge ou de décharge à l'aide la batterie de premier type (S304) ;
dans lequel, la réalisation de l'opération de charge ou de décharge à l'aide de la batterie de premier type comprend,
en réponse à la détermination qu'une batterie respective de premier type a un TN inférieur ou égal à un seuil de temps continu, considérer la batterie respective de premier type comme une batterie de deuxième type, et effectuer l'opération de charge ou de décharge à l'aide de la batterie de deuxième type (S402).

11. Appareil selon la revendication 10, dans lequel le module de contrôle est en outre configuré pour effectuer l'opération suivante :
en réponse à la détermination de ce qu'aucune de l'au moins une batterie n'a un TS inférieur ou égal à un premier seuil de temps cumulé dans le terminal, indiquer que l'au moins une batterie dans le terminal doit être remplacée.
